# EUROPÄISCHE PATENTSCHRIFT

(11) **EP 2 457 726 B1**
(45) Veröffentlichungstag und Bekanntmachung des Hinweises auf die Patenterteilung: **09.10.2013**
(21) Anmeldenummer: 12156923.0
(22) Anmeldetag: 31.10.2009
(51) Int. Cl.: B32B 27/12, B32B 27/18, B32B 27/32, B65D 65/40, B65D 81/26, C08G 18/00, C09J 7/02, C23F 11/02, D04H 13/00

(54) **Verpackungsmaterial für korrosionsanfällige Gegenstände aus Metall**
Packaging material for metallic objects susceptible to corrosion
Matériau d'emballage pour objets en métal sujets à la corrosion

(30) Priorität: 07.11.2008 DE 102008056724; 10.12.2008 DE 102008061253; 09.03.2009 DE 102009013959
(43) Veröffentlichungstag der Anmeldung: 30.05.2012
(62) Teilanmeldung aus: 09013730.8
(73) Patentinhaber: Mondi Gronau GmbH, 48599 Gronau (DE)
(72) Erfinder: Leuders, Joseph, 48599 Gronau-Epe (DE); Wachs, Tilo, 53424 Remagen Bandorf (DE)
(74) Vertreter: Albrecht, Rainer Harald

(56) Entgegenhaltungen:
- EP-A2- 0 825 019
- WO-A1-03/103957

## Beschreibung

Die Erfindung betrifft ein Verpackungsmaterial für korrosionsanfällige Gegenstände aus Metall.

Das Verpackungsmaterial besteht aus einer die Verpackungsaußenseite bildenden Kunststofffolie, einer innenseitigen Schicht und einer die Kunststofffolie mit der innenseitigen Schicht verbindenden Klebstoffschicht, wobei die Klebstoffschicht einen flüchtigen Korrosionsinhibitor enthält und wobei die innenseitige Schicht im Vergleich zur Kunststofffolie an der Verpackungsaußenseite eine hohe Durchlässigkeit für den Korrosionsinhibitor aufweist.

Bei dem flüchtigen Korrosionsinhibitor, nachfolgend auch VCI (Volatile Corrosion Inhibitor) genannt, handelt es sich um Verbindungen, die neben korrosionsschützenden Eigenschaften auch einen Dampfdruck besitzen. Aufgrund der Verdampfungseigenschaften geht der Korrosionsinhibitor in die Gasphase über und setzt sich auf der Metalloberfläche des zu schützenden Gegenstandes als Film ab. Die Anziehung der VCI-Moleküle ist stärker als die von Wassermolekülen, so dass sich auf der Metalloberfläche eine Schutzschicht bildet. Die Anwesenheit des in die Gasphase übergegangenen Korrosionsschutzinhibitors hemmt die zur Korrosion führenden elektrochemischen Prozesse. Auf diese Weise wird innerhalb der Verpackung ein temporärer Korrosionsschutz herbeigeführt, dessen Wirkungsdauer über mehrere Monate anhält. Als flüchtiger Korrosionsinhibitor sind beispielsweise Nitrit-Verbindungen oder Aminsalze, z. B. Dicyclohexylamin-Benzoat und Diethanolamin-Nitrit, einsetzbar (GB 1 048 770). Nach dem Entfernen der VCI-Verpackung entweichen die VCI-Komponenten rückstandsfrei von der Metalloberfläche, so dass keine Nachreinigung der Metallgegenstände vor ihrer weiteren Verwendung erforderlich ist. Das ist ein entscheidender Vorteil einer VCI-haltigen Verpackung gegenüber anderen Methoden des temporären Korrosionsschutzes, wie z. B. der Beölung/Befettung von Bauteilen. Letztere erfordern in jedem Fall eine Entfernung des Korrosionsschutzöls/Fettes von den Teilen. Dies erfolgt in der Regel mit organischen Lösungsmitteln oder sauren bzw. alkalischen Entfettungslösungen und stellt zusätzliche Prozessschritte und eine Gesundheits- und Umweltgefährdung dar.

Es ist bekannt, feste oder flüssige VCI-Wirkstoffe oder VCI-Wirkstoffgemische auf Verpackungsmaterialien wie Kunststofffolien, Papieren, Pappen, Schaumstoffen, Verbundmaterialien und dergleichen aufzubringen oder einzuarbeiten. Hierbei kommen Verfahren wie das Tränken, Besprühen, Beschichten oder Einarbeiten mittels Extrusion sowie ähnliche Methoden zum Einsatz. Der Vorteil von VCI-haltigen Papieren oder Pappen ist die große Aufnahmefähigkeit für die Wirkstoffe. Papiere und Pappen können ein Vielfaches der Wirkstoffmenge aufnehmen, die in Kunststofffolien einarbeitbar ist. Allerdings geben sie die Wirkstoffe sehr viel schneller ab, als letztere. Das bedeutet, dass VCI-getränkte Papiere und Pappen zwar einen schnellen und zunächst wirksamen Korrosionsschutz ermöglichen, der jedoch nicht lange anhält. Kunststofffolien und andere Polymerträger geben ihre VCI-Wirkstoffe sehr viel langsamer ab. Deshalb erzielen sie keine so schnelle Korrosionsschutzwirkung wie Papier, haben dafür in der Regel aber eine wesentlich bessere Langzeitwirkung.

In industriellen Verpackungsprozessen sind beide Wirkungsweisen bedeutsam. Verpackte Anlagenteile oder Werkstücke kommen üblicherweise bereits nach wenigen Stunden zum Transport. Das heißt, sie werden unter Umständen ohne längere Konditionierungszeit für die VCI-Komponenten den Umgebungsbedingungen in Transportcontainern auf Lastkraftwagen und Schiffen unterworfen. Hier ist ein schneller Korrosionsschutz der Teile erforderlich. Bei langer Transport- oder Lagerungsdauer ist wiederum ein lang anhaltender Korrosionsschutz notwendig. In der Praxis werden daher häufig Materialkombinationen zum temporären Korrosionsschutz eingesetzt. So kommen z. B. VCI-Folienumverpackungen in Kombination mit eingelegten VCI-Papieren oder VCI-Schäumen zum Einsatz. Auch die gemeinsame Anwendung von Beölung/Befettung der zu schützenden Teile und VCI-Folienumverpackungen ist üblich. Beide Verfahren haben jedoch Nachteile. Die eingelegten Papiere können durch eindringenden Wasserdampf durchnässen und dann auf den Metallteilen zum dauerhaften Feuchtigkeitsspender werden, was Korrosion hervorruft. Die Kombination aus Korrosionsschutzölen/Fetten und VCI-Umverpackungen kann zu undefinierten Bedingungen auf den Metallteilen und sogar zum Aufheben des Korrosionsschutzes führen. Die gemeinsame Anwendung unterschiedlicher VCI-Verpackungsmaterialien hat einen weiteren entscheidenden Nachteil. Unter Umständen kann es durch Reaktionen der unterschiedlichen VCI-Komponenten zur Bildung von Gefahrstoffen wie z. B. N-Nitrosaminen kommen. Letzte stark krebserzeugende Substanzen bilden sich bei gemeinsamer Anwendung Nitrit- und sekundär-Amin-haltiger Produkte.

Ein Verpackungsmaterial mit den eingangs beschriebenen Merkmalen ist aus EP 0 825 019 A2 bekannt. Zur Verklebung der verpackungsaußenseitigen Kunststofffolie mit einer innenliegenden textilen Schicht wird ein Hotmelt-Klebstoff verwendet. Der flüchtige Korrosionsinhibitor muss im schmelzeflüssigen Zustand mit dem Klebstoff vermischt werden. Die Mischung aus Hotmelt-Klebstoff und Korrosionsinhibitor muss ferner bei der Verarbeitung, das heißt, zur Herstellung des Kaschierverbundes, erneut aufgeheizt werden. In beiden Verfahrensschritten geht ein großer Teil des flüchtigen VCI-Wirkstoffes verloren. Es sind Arbeitsschutzmaßnahmen notwendig, da die als flüchtige Korrosionsinhibitor geeigneten Substanzen gesundheitsbedenklich sind. Des Weiteren hat das Verpackungsmaterial den zuvor erläuterten Nachteil von VCI-haltigen Kunststofffolien, dass der Korrosionsschutz sich verhältnismäßig langsam aufbaut.

Vor diesem Hintergrund liegt der Erfindung die Aufgabe zugrunde, ein Verpackungsmaterial mit Korrosionsschutzwirkung bereitzustellen, welches nur den Zusatz von kleinen Mengen eines Korrosionsinhibitors erfordert und ohne besondere Arbeitsschutzvorkehrungen hergestellt werden kann. Bei der Verwendung als Verpackung für metallische Gegenstände soll sich die Korrosionsschutzwirkung schnell aufbauen und ferner ein Langzeitschutz gewährleistet sein.

Ausgehend von einem Verpackungsmaterial mit den eingangs beschriebenen Merkmalen wird die Aufgabe erfindungsgemäß dadurch gelöst, dass die innenseitige Schicht aus einer perforierten Folie, einer Folie aus einem Polymer, welches eine große Permeabilität für den Korrosionsinhibitor aufweist, oder aus einem Schaumstoff besteht. Die Oberfläche der aus einem chemisch abbindenden Reaktionsklebestoff gebildeten Klebstoffschicht ist durch eine Vielzahl von Glasbläschen vergrößert, die durch eine chemische Reaktion mit Gasbildung bei der Aushärtung des Klebstoffes erzeugt worden sind. Der Korrosionsinhibitor ist in einer Menge von 0,1 g/m² bis 5g/m² bezogen auf die Fläche des Verpackungsmaterials in der Klebstoffschicht enthalten.

Chemisch abbindende Reaktionsklebstoffe, die im Rahmen der erfindungsgemäßen Lehre eingesetzt werden, sind bei Temperaturen bis etwa 80° C verarbeitbar. Vorzugsweise werden chemisch abbindende Reaktionsklebstoffe verwendet, die bei niedrigeren Temperaturen, insbesondere Temperaturen bis 60° C, verarbeitet werden können. Besonders bevorzugt sind chemisch abbindende Reaktionsklebstoffe, die bei Raumtemperatur oder leicht erhöhter Temperatur aushärten und mit einer Temperatur bis 40° C verarbeitet werden. Der Korrosionsinhibitor kann bei den vorgenannten Temperaturen kurz vor dem Kaschiervorgang in den Kaschierklebstoff eingemischt werden, wobei nur geringe Mengen des flüchtigen Korrosionsinhibitors in die Gasphase übergehen, so dass besondere Arbeitsschutzmaßnahmen nicht notwendig sind. Vorteilhaft ist ferner, dass lediglich Kaschierwalzen und Klebstoffwannen mit den gesundheitsbedenklichen Substanzen verunreinigt werden und sich diese Apparateteile nach der Kaschierung leicht reinigen lassen.

Gemäß einer bevorzugten Ausgestaltung weisen die Glasbläschen einen Durchmesser im Mikrometerbereich bis Nanometerbereich auf. Die große Oberfläche des Klebstoffschaumes bewirkt eine sehr schnelle und effektive Abgabe eines Teils der VCI-Wirksubstanzen. Dies führt zu einem schnell aufgebauten VCI-Korrosionsschutz der verpackten Metallgegenstände. Gleichzeitig hat der ausgehärtete Klebstoff jedoch auch die lang andauernde Depotwirkung von VCI-Kunststofffolien, so dass noch nach einem Zeitraum von mehreren Tagen bis Wochen eine genügend große Menge VCI-Wirkstoff für den Korrosionsschutz der verpackten Metallbauteile freigesetzt wird.

Die für die Abgabe der VCI-Wirksubstanzen wirksame Oberfläche der Klebstoffschicht kann auch dadurch vergrößert werden, dass als innenseitige Schicht ein Material ausgewählt wird, welches teilweise in die Klebstoffschicht eindringt. Vorteilhaft ist es insbesondere, wenn das in die Klebstoffschicht eindringende Material der Innenschicht so strukturiert ist, dass zwischen dem Material der Innenschicht und der Klebstoffschicht Kapilarkräfte wirksam werden.

Für die Korrosionsschutzwirkung des Verpackungsmaterials werden nur kleine Mengen des Korrosionsinhibitors benötigt. Die Kunststofffolie bildet eine wirksame Sperrschicht und stellt sicher, dass die Wirksubstanz nahezu ausschließlich in den von einer Verpackung eingeschlossenen Raum übergeht. Aufgrund des geringen Anteils des Korrosionsinhibitors in der Klebstoffschicht wird die Kleberhaftung nicht beeinträchtigt.

Als Reaktionsklebstoff kann ein Einkomponenten-Reaktionsharzklebstoff verwendet werden, der bei Zutritt von Luftfeuchtigkeit auspolymerisiert. Bevorzugt ist ein lösungsmittelfreier PUR-Klebstoff auf Basis aliphatischer oder aromatischer Isocyanate. Durch einen Wasserzusatz, der mit der VCI-Wirksubstanz der Klebstoffmasse zugeführt werden kann, kann die mit einer Gasbildung verbundene Reaktion und damit auch der Anteil, die Verteilung und die Größe der in der ausgehärteten Klebstoffschicht enthaltenen Gasbläschen beeinflusst werden. Bezogen auf das Gesamtgewicht von VCI-Wirksubstanz und Wasser beträgt der Wassergehalt beispielsweise zwischen 0,2 Gew.-% und 7 Gew.-%, vorzugsweise zwischen 0,5 Gew.-% und 3 Gew.-% Wasser. Vorzugsweise werden die Reaktionsbedingungen so eingestellt, dass die Struktur des ausgehärteten Klebstoffes einem aufgeschäumten Kunststoff gleicht. Dabei weist die ausgehärtete Klebstoffschicht eine Schichtdicke auf, die das zweifache bis fünffache der Dicke des applizierten ungeschäumten Klebstoffes beträgt. Schließlich ist auch eine Mischung mehrerer VCI-Wirksubstanzen möglich. Als VCI-Wirksubstanzen sind unter anderen Verbindung primärer, sekundärer oder tertiärer Amine oder Nitritverbindungen geeignet.

Im Rahmen der Erfindung soll es aber nicht ausgeschlossen sein, dass auch lösemittelbasierte Reaktionsklebstoffe und Zweikomponenten-Reaktionsharzklebstoffe verwendet werden.

Die Klebstoffschicht wird zweckmäßig mit einem Auftragsgewicht von 1 g/m² bis 10 g/m² bezogen auf die Fläche des Verpackungsmaterials appliziert, wobei eine Menge von 2 bis 6 g/m² bevorzugt ist.

Der Korrosionsschutzinhibitor ist vorzugsweise mit dem Reaktionsklebstoff gleichmäßig vermischt. Bezogen auf das Gesamtgewicht von Klebstoff und VCI-Wirksubstanz beträgt der Anteil der VCI-Wirksubstanz vorzugsweise zwischen 2 und 20 Gew.-%, besonders bevorzugt zwischen 2 und 10 Gew.-%.

Die Kunststofffolie und die innenseitige Schicht können durch einen gleichmäßigen Auftrag der Klebstoffschicht flächig miteinander verbunden sein. Im Rahmen der Erfindung liegt es aber auch, dass die Klebstoffschicht ein Muster aus Klebeflächen und klebstofffreien Flächen bildet und beispielsweise punktförmig, streifenförmig, gitterförmig und dergleichen im Kontaktbereich zwischen Kunststofffolie und der textilen Schicht vorliegt.

Die Kunststofffolie besteht aus einem Polymer, welches eine Barriere gegen eine Migration des Korrosionsinhibitors bildet. Die Migration des Klebstoffes im Polymer ist abhängig von der Löslichkeit des Wirkstoffes im Polymer sowie der Diffusionsgeschwindigkeit. Die Migration ist mindestens um den Faktor 5, vorzugsweise um mehr als den Faktor 10, kleiner als die Migration der Wirksubstanz in der Klebstoffschicht. Für die Kunststofffolie kommen eine Vielzahl üblicher Polymere in Betracht. Vorzugsweise besteht die Kunststofffolie aus Polyolefin, insbesondere Polyethylen, oder einem Polyolefin-Copolymer. Die Kunststofffolie kann ferner mehrschichtig ausgebildet sein und eine Sperrschicht mit einem hohen Diffusionswiderstand gegenüber dem Korrosionsinhibitor aufweisen, während eine oder mehrere weitere Schichten der Folie und dem Verbundstoff gewünschte Verarbeitungs- und Gebrauchseigenschaften, z. B. Dehnungseigenschaften, Siegelfähigkeit und dergleichen, verleihen. Um eine sehr hohe Barrierewirkung zu erzielen, kann die Kunststofffolie mit einer dünnen Metallschicht bedampft sein. Bei einer mehrschichtigen Ausgestaltung kann neben dem Bedampfen einer der Schichten auch die Einbindung einer Metalllage als Barriere vorgesehen sein. Unabhängig davon, ob die Kunststofffolie ein- oder mehrschichtig ausgebildet ist, weist sie zweckmäßig eine Dicke zwischen 10 µm und 120 µm auf. Besonders bevorzugt ist eine Dicke zwischen 20 µm und 50 µm.

Die der Klebstoffschicht zugewandte Seite der Kunststofffolie kann eine durch Vorbehandlung, insbesondere Corona-Vorbehandlung, modifizierte Oberflächenstruktur zur Verbesserung der Klebstoffhaftung aufweisen.

Die innenseitige Schicht kann alternativ von einem Schaumstoff gebildet sein, der vorzugsweise eine offenporige Struktur aufweist, um eine hohe Durchlässigkeit für die VCI-Wirksubstanz zu ermöglichen. Bei einer innenseitigen Schicht aus Schaumstoff ergibt sich auch der Vorteil, dass Flüssigkeit, die sich an der innenseitigen Schicht ansammelt, beispielsweise Kondenswasser, zu einem gewissen Maße aufgenommen werden kann. Dadurch kann die Ausbildung eines durchgängigen Flüssigkeitsfilms an der innenseitigen Schicht und entsprechend eine erhöhte Korrosionsneigung des verpackten Gegenstandes vermieden werden.

Das erfindungsgemäße Verpackungsmaterial eignet sich zum Verpacken und zum Schutz von metallischen Gegenständen aus Stahl, Edelstahl, Aluminium, Kupfer, Messing und dergleichen und kann beispielsweise als Verpackungsmaterial für spanend bearbeitete Maschinenteile, Maschinen und Apparate, Fahrzeuge, Bleche und andere Teile für die Stahlindustrie verwendet werden. Aufgrund der geringen Anteile des Korrosionsinhibitors können auch Maschinen für die Lebensmittelindustrie verpackt werden.

Umverpackungen aus dem erfindungsgemäßen Verpackungsmaterial gewährleisten einen schnellen Aufbau eines vollständigen Korrosionsschutzes metallischer Werkstoffe über die Gasphase. Dies wurde bisher nur durch den Einsatz von VCI-Papieren bzw. Pappen erreicht. Ferner wird auch in entsprechenden lose anliegenden VCI-haltigen Verpackungen, wie z. B. Folienbeuteln, ein schneller und guter Korrosionsschutz der verpackten Metallteile erzielt. Das erfindungsgemäße Verpackungsmaterial gewährleistet darüber hinaus auch eine lange anhaltende hervorragende Korrosionsschutzwirkung selbst bei Kondenswasserbildung direkt auf den verpackten Metalloberflächen, z. B. bei langen Containertransporten über See. Das erfindungsgemäße Verpackungsmaterial vereinigt in sich somit die Vorteile von VCI-Papieren und VCI-Folien gleichermaßen ohne deren Nachteile aufzuweisen. Es muss nur noch ein einziges Verpackungsmaterial für viele verschiedene Anwendungsfälle eingesetzt werden. Kombinationen verschiedener VCI-Materialien mit den entsprechenden zuvor genannten Nachteilen entfallen.

Die Gesamtdicke des Verpackungsmaterials liegt typischerweise zwischen 70 und 200 µm, vorzugsweise zwischen 80 und 150 µm.

## Patentansprüche

1. Verpackungsmaterial für korrosionsanfällige Gegenstände aus Metall, bestehend aus einer die Verpackungsaußenseite bildenden Kunststofffolie, einer innenseitigen Schicht und einer die Kunststofffolie mit der innenseitigen Schicht verbindenden Klebstoffschicht, wobei die Klebstoffschicht einen flüchtigen Korrosionsinhibitor enthält und wobei die innenseitige Schicht im Vergleich zur Kunststofffolie an der Verpackungsaußenseite eine hohe Durchlässigkeit für den Korrosionsinhibitor aufweist, **dadurch gekennzeichnet, dass** die innenseitige Schicht aus einer perforierten Folie, einer Folie aus einem Polymer, welches eine großer Permeabilität für den Korrosionsinhibitor aufweist, oder einem Schaumstoff besteht, dass die Oberfläche der aus einem chemisch abbindenden Reaktionsklebstoff gebildeten Klebstoffschicht durch eine Vielzahl von Gasbläschen vergrößert ist, die durch eine chemische Reaktion mit Gasbildung bei der Aushärtung des Klebstoffes erzeugt worden sind, und dass der Korrosionsinhibitor in einer Menge von 0,1 g/m² bis 5 g/m² bezogen auf die Fläche des Verpackungsmaterials in der Klebstoffschicht enthalten ist.

2. Verpackungsmaterial nach Anspruch 1, **dadurch gekennzeichnet, dass** die Gasbläschen einen Durchmesser im Mikrometerbereich bis Nanometerbereich aufweisen.

3. Verpackungsmaterial nach Anspruch 1 oder 2, **dadurch gekennzeichnet, dass** die Struktur der ausgehärteten Klebstoffschicht einem aufgeschäumten Kunststoff gleicht und dass die Klebstoffschicht eine Schichtdicke aufweist, die das zweifache bis fünffache der Dicke des applizierten ungeschäumten Klebstoffes beträgt.

4. Verpackungsmaterial nach einem der Ansprüche 1 bis 3, **dadurch gekennzeichnet, dass** als Reaktionsklebstoff ein Einkomponenten-Reaktionsharzklebstoff verwendet wird, der bei Zutritt von Luftfeuchtigkeit auspolymerisiert.

5. Verpackungsmaterial nach einem der Ansprüche 1 bis 4, **dadurch gekennzeichnet, dass** als Reaktionsklebstoff ein lösungsmittelfreier PUR-Klebestoff auf Basis aliphatischer oder aromatischer Isocyanate verwendet wird.

6. Verpackungsmaterial nach einem der Ansprüche 1 bis 5, **dadurch gekennzeichnet, dass** die Klebstoffschicht mit einem Auftragsgewicht von 1 g/m² bis 10 g/m², vorzugsweise mit einem Auftragsgewicht von 2 g/m² bis 6 g/m², appliziert ist.

7. Verpackungsmaterial nach einem der Ansprüche 1 bis 6, **dadurch gekennzeichnet, dass** die Wirksubstanz des Korrosionsinhibitors aus einer Verbindung primärer, sekundärer oder tertiärer Amine besteht.

8. Verpackungsmaterial nach einem der Ansprüche 1 bis 7, **dadurch gekennzeichnet, dass** der Korrosionsinhibitor mit dem Reaktionsklebstoff gleichmäßig vermischt ist.

9. Verpackungsmaterial nach einem der Ansprüche 1 bis 8, **dadurch gekennzeichnet, dass** die Kunststofffolie und die innenseitige Schicht durch einen gleichmäßigen Auftrag der Klebstoffschicht flächig miteinander verklebt sind.

10. Verpackungsmaterial nach einem der Ansprüche 1 bis 8, **dadurch gekennzeichnet, dass** die Klebstoffschicht ein Muster aus Klebeflächen und klebstofffreien Flächen bildet.

11. Verpackungsmaterial nach einem der Ansprüche 1 bis 10, **dadurch gekennzeichnet, dass** die Kunststofffolie aus einem Polymer besteht, welches eine Barriere gegen eine Migration des Korrosionsinhibitors bildet.

12. Verpackungsmaterial nach einem der Ansprüche 1 bis 11, **dadurch gekennzeichnet, dass** die Kunststofffolie aus Polyolefin oder einem Polyolefin-Copolymer besteht.

13. Verpackungsmaterial nach einem der Ansprüche 1 bis 10, **dadurch gekennzeichnet, dass** die Kunststofffolie mehrschichtig ausgebildet ist und eine Sperrschicht mit einem hohen Diffusionswiderstand für den Korrosionsinhibitor aufweist.

14. Verpackungsmaterial nach einem der Ansprüche 1 bis 13, **dadurch gekennzeichnet, dass** die Kunststofffolie eine Dicke zwischen 10 und 120 µm, vorzugsweise eine Dicke zwischen 20 und 50 µm aufweist.

15. Verpackungsmaterial nach einem der Ansprüche 1 bis 14, **dadurch gekennzeichnet, dass** die der Klebstoffschicht zugewandte Seite der Kunststofffolie eine durch eine Vorbehandlung, insbesondere Corona-Vorbehandlung, modifizierte Oberflächenstruktur zur Verbesserung der Klebstoffhaftung aufweist.

16. Verpackungsmaterial nach einem der Ansprüche 1 bis 15, **dadurch gekennzeichnet, dass** die Gesamtdicke zwischen 70 und 200 µm, vorzugsweise zwischen 80 und 150 µm, liegt.

## Claims

1. A packaging material for metal objects susceptible to corrosion, comprising a plastic film forming the outside of the packaging, an inside layer and an adhesive layer bonding the plastic film to the inside layer, wherein the adhesive layer contains a volatile corrosion inhibitor and wherein the inside layer exhibits a high permeability to the corrosion inhibitor compared with the plastic film on the outside of the packaging, **characterized in that** the inside layer comprises a perforated film, a polymer film which exhibits a great permeability to the corrosion inhibitor or a foam material, that the surface of the adhesive layer formed from a chemically binding reaction adhesive is enlarged by a plurality of gas bubbles, which have been produced by a chemical reaction with gas formation during the hardening of the adhesive and that the corrosion inhibitor is contained in a quantity of 0.1 g/m² to 5 g/m² relative to the packaging material in the adhesive layer.

2. The packaging material according to claim 1, **characterized in that** the gas bubbles have a diameter in the micrometer range to the nanometer range.

3. The packaging material according to claim 1 or 2, **characterized in that** the structure of the hardened adhesive layer resembles a foamed plastic material and that the adhesive layer has a layer thickness that is twice to five times the thickness of the applied unfoamed adhesive.

4. The packaging material according to one of the claims 1 to 3, **characterized in that** a mono-component reaction resin adhesive is used as the reaction adhesive, which polymerizes upon exposure to atmospheric moisture.

5. The packaging material according to one of the claims 1 to 4, **characterized in that** a solution-free PUR adhesive based on aliphatic or aromatic isocyanates is used as the reaction adhesive.

6. The packaging material according to one of the claims 1 to 5, **characterized in that** the adhesive layer is applied with an application weight of 1 g/m² to 10 g/m², preferably with an application weight of 2 g/m² to 6 g/m².

7. The packaging material according to one of the claims 1 to 6, **characterized in that** the active substance of the corrosion inhibitor comprises a compound of primary, secondary or tertiary amines.

8. The packaging material according to one of the claims 1 to 7, **characterized in that** the corrosion inhibitor is evenly mixed with the reaction adhesive.

9. The packaging material according to one of the claims 1 to 8, **characterized in that** the plastic film and the inside layer are bonded to one another in planar fashion by a uniform application of the adhesive layer.

10. The packaging material according to one of the claims 1 to 8, **characterized in that** the adhesive layer forms a pattern of adhesive surfaces and adhesive-free surfaces.

11. The packaging material according to one of the claims 1 to 10, **characterized in that** the plastic film comprises a polymer which forms a barrier against migration of the corrosion inhibitor.

12. The packaging material according to one of the claims 1 to 11, **characterized in that** the plastic film comprises polyolefin or a polyolefin copolymer.

13. The packaging material according to one of the claims 1 to 10, **characterized in that** the plastic film has multiple layers and has a blocking layer with a high diffusion resistance for the corrosion inhibitor.

14. The packaging material according to one of the claims 1 to 13, **characterized in that** the plastic film has a thickness of between 10 and 120 ìm, preferably a thickness of between 20 and 50 ìm.

15. The packaging material according to one of the claims 1 to 14, **characterized in that** the side of the plastic film turned towards the plastic layer has a surface structure modified by pretreatment, particularly Corona pretreatment, to improve the adhesive bond.

16. The packaging material according to one of the claims 1 to 15, **characterized in that** the total thickness is typically between 70 and 200 ìm, preferably between 80 and 150 ìm.

## Revendications

1. Matière d'emballage pour des objets métalliques sensibles à la corrosion, constituée d'un film en matière plastique formant la face extérieure de l'emballage, d'une couche interne et d'une couche d'agent adhésif reliant le film en matière plastique avec la couche interne, la couche d'agent adhésif contenant un inhibiteur de corrosion volatil et la couche interne faisant preuve d'une haute perméabilité à l'inhibiteur de corrosion, en comparaison du film en matière plastique sur la face extérieure de l'emballage, **caractérisée en ce que** la couche interne est constituée d'un film perforé, d'un film en un polymère qui fait preuve d'une perméabilité à l'inhibiteur de corrosion ou d'une mousse synthétique, **en ce que** la surface de la couche d'agent adhésif formée d'une colle réactive à prise chimique est agrandie par une pluralité de bulles de gaz, qui a été créée par une réaction chimique avec formation de gaz lors du durcissement de l'agent adhésif et **en ce que** l'inhibiteur de corrosion est contenu dans la couche d'agent adhésif dans une quantité de 0,1 g/m² à 5 g/m² en rapport à la surface de la matière d'emballage.

2. Matière d'emballage selon la revendication 1, **caractérisée en ce que** les bulles de gaz présentent un diamètre de l'ordre des micromètres, jusque dans l'ordre des nanomètres.

3. Matière d'emballage selon la revendication 1 ou la revendication 2, **caractérisée en ce que** la structure de la couche d'agent adhésif durcie ressemble à une matière plastique moussée et **en ce que** la couche d'agent adhésif présente une épaisseur de couche s'élevant au double à jusqu'au quintuple de l'épaisseur de l'agent adhésif non moussé appliqué.

4. Matière d'emballage selon l'une quelconque des revendications 1 à 3, **caractérisée en ce qu'**on utilise en tant que colle réactive une résine adhésive réactive monocomposant qui se polymérise lorsqu'elle est exposée à l'humidité de l'air.

5. Matière d'emballage selon l'une quelconque des revendications 1 à 4, **caractérisée en ce qu'**en tant que colle réactive, on utilise une colle PUR sans solvants sur base d'isocyanates aliphatiques ou aromatiques.

6. Matière d'emballage selon l'une quelconque des revendications 1 à 5, **caractérisée en ce que** la couche d'agent adhésif est appliquée à raison d'un poids d'application de 1 g/m² à 10 g/m², de préférence à raison d'un poids d'application de 2 g/m² à 6 g/m².

7. Matière d'emballage selon l'une quelconque des revendications 1 à 6, **caractérisée en ce que** la substance active de l'inhibiteur de corrosion est constituée d'un composé d'amines primaires, secondaires ou tertiaires.

8. Matière d'emballage selon l'une quelconque des revendications 1 à 7, **caractérisée en ce que** l'inhibiteur de corrosion est uniformément mélangé à la colle réactive.

9. Matière d'emballage selon l'une quelconque des revendications 1 à 8, **caractérisée en ce que** le film de matière plastique et la couche interne sont collés à plat l'un sur l'autre par une application uniforme de la couche d'agent adhésif.

10. Matière d'emballage selon l'une quelconque des revendications 1 à 8, **caractérisée en ce que** la couche d'agent adhésif forme un motif composé de surfaces collées et de surfaces exemptes d'agent adhésif.

11. Matière d'emballage selon l'une quelconque des revendications 1 à 10, **caractérisée en ce que** le film en matière plastique est constitué d'un polymère qui forme une barrière contre une migration de l'inhibiteur de corrosion.

12. Matière d'emballage selon l'une quelconque des revendications 1 à 11, **caractérisée en ce que** le film en matière plastique est constitué d'une polyoléfine ou d'un copolymère de polyoléfines.

13. Matière d'emballage selon l'une quelconque des revendications 1 à 10, **caractérisée en ce que** le film en matière plastique est conçu en multicouches et comporte une couche de barrage à haute résistance à la diffusion pour l'inhibiteur de corrosion.

14. Matière d'emballage selon l'une quelconque des revendications 1 à 13, **caractérisée en ce que** le film en matière plastique présente une épaisseur comprise entre 10 et 120 µm, de préférence une épaisseur comprise entre 20 et 50 µm.

15. Matière d'emballage selon l'une quelconque des revendications 1 à 14, **caractérisée en ce que** la face du film en matière plastique qui est dirigée vers la couche d'agent adhésif présente une structure superficielle modifiée par un prétraitement, notamment par un prétraitement corona, pour l'amélioration de l'adhérence de l'agent adhésif.

16. Matière d'emballage selon l'une quelconque des revendications 1 à 15, **caractérisée en ce que** l'épaisseur totale se situe entre 70 et 200 µm, de préférence entre 80 et 150 µm.
